**Europäisches Patentamt**

**European Patent Office**

**Office européen des brevets**

(11) Numéro de publication : **0 359 651 B1**

(19)

(12) # FASCICULE DE BREVET EUROPEEN

(45) Date de publication du fascicule du brevet :
**16.12.92 Bulletin 92/51**

(21) Numéro de dépôt : **89402481.9**

(22) Date de dépôt : **12.09.89**

(51) Int. Cl.⁵ : **H02G 3/12**

(54) **Dispositif de fixation pour organe à fixer sur un quelconque support, et organe à fixer, en particulier plaque de support pour appareillage électrique, comportant au moins un tel dispositif de fixation.**

(30) Priorité : **16.09.88 FR 8812101**

(43) Date de publication de la demande :
**21.03.90 Bulletin 90/12**

(45) Mention de la délivrance du brevet :
**16.12.92 Bulletin 92/51**

(84) Etats contractants désignés :
**AT BE CH DE ES FR GB IT LI NL**

(56) Documents cités :
**FR-A- 2 210 898**
**GB-A- 689 464**
**US-A- 3 059 045**

(73) Titulaire : **LEGRAND**
**128 Avenue du Maréchal de Lattre de Tassigny**
**F-87045 Limoges Cédex (FR)**

(72) Inventeur : **Parlatore, Roger**
**10 Rue Corneille**
**F-87920 Condat (FR)**
Inventeur : **Leluc, Alain**
**Les Hauts D'Envaud**
**F-78110 Solignac (FR)**
Inventeur : **Brousse, Robert**
**Lostanges**
**F-19500 Meyssac (FR)**

(74) Mandataire : **CABINET BONNET-THIRION**
**95 Boulevard Beaumarchais**
**F-75003 Paris (FR)**

EP 0 359 651 B1

## Description

Dispositif de fixation pour organe à fixer sur un quelconque support, et organe à fixer, en particulier plaque de support pour appareillage électrique, comportant au moins un tel dispositif de fixation

La présente invention concerne d'une manière générale les organes à fixer sur un quelconque support, et elle vise plus particulièrement le cas où, pour cette fixation, il est mis en oeuvre au moins un moyen de fixation ponctuel tel que vis ou autre à engager dans un trou prévu à cet effet dans l'organe à fixer.

C'est le cas, par exemple, pour les plaques de support pour appareillage(s) électrique(s), notamment lorsqu'une telle plaque de support doit être rapportée par des vis sur une boîte destinée à servir de logement au mécanisme d'un tel appareillage électrique.

Pour ce faire, une telle plaque de support comporte, usuellement, suivant des implantations et/ou configurations diverses, un nombre de trous compris entre deux et quatre, et, pour permettre un éventuel rattrapage d'aplomb ou d'entr'axe par rapport à la boîte sous-jacente, ou pour se satisfaire d'une éventuelle déformation de celle-ci, notamment lorsqu'elle a été préalablement encastrée dans un mur, certains au moins de ces trous sont des trous oblongs, c'est-à-dire des trous plus ou moins allongés en boutonnière.

C'est le cas par exemple dans le document US-A-3.059.045.

Mais le rattrapage autorisé par de tels trous oblongs n'est pas toujours suffisant.

Des difficultés de même type peuvent également apparaître lorsque deux appareillages électriques doivent être disposés côte à côte, les boîtes correspondantes pouvant être plus ou moins décalées l'une par rapport à l'autre ou présenter un défaut d'aplomb l'une par rapport à l'autre, et ces difficultés se trouvent encore accrues lorsque, pour deux de telles boîtes, il est prévu une même plaque de support.

La présente invention a d'une manière générale pour objet une disposition permettant avantageusement d'augmenter de manière très simple les possibilités de rattrapage d'aplomb ou d'entr'axe dans ces divers cas.

De manière plus précise, elle a tout d'abord pour objet un dispositif de fixation pour organe à fixer sur un quelconque support, du genre comportant, pour le passage d'un moyen de fixation tel que vis, au moins un trou oblong, ce dispositif de fixation étant d'une manière générale caractérisé en ce que ledit trou oblong appartient à une pièce distincte montée rotative dans un logement prévu à cet effet sur l'organe à fixer ; elle a encore pour objet tout organe à fixer, et par exemple une plaque de support pour appareillage électrique, comportant au moins un tel dispositif de fixation.

Il suffit, suivant l'invention, de faire tourner dans son logement la pièce comportant le trou oblong pour adapter au mieux, à l'entr'axe ou à l'aplomb à respecter, l'orientation de ce trou oblong.

Certes, il est déjà connu, notamment par le document FR-A-2.188.402, ou par le document FR-A-2.210.898, de disposer, en pratique en position excentrée, sur une pièce rotative, un moyen de fixation.

Dans le document FR-A-2.188.402, ce moyen de fixation est un goujon fileté propre à recevoir un écrou.

Dans le document FR-A-2.219.898, il s'agit d'une vis traversant un simple trou.

Mais, dans l'un et l'autre cas, la pièce rotative correspondante équipe non pas l'organe à fixer mais le support correspondant.

En outre, dans l'un et l'autre cas, cette pièce rotative ne comporte pas de trou oblong, mais, au mieux, un simple trou, ce qui ne permet pas à l'ensemble de bénéficier des avantages inhérents à un trou oblong.

Enfin, dans l'un et l'autre cas, cette pièce rotative constitue nécessairement un excentrique.

Bien qu'une telle éventualité ne soit pas exclue, elle n'est pas indispensable à la mise en oeuvre de l'invention.

En bref, l'invention concerne un organe à fixer, et, de manière très simple, la pièce rotative qui la caractérisé présente un trou oblong, ce qui suffit à permettre un rattrapage d'entr'axe ou d'aplomb satisfaisant dans la plupart des cas de mise en oeuvre, sinon dans la totalité de ceux-ci.

Les caractéristiques et avantages de l'invention ressortiront d'ailleurs de la description qui va suivre, à titre d'exemple, en référence aux dessins schématiques annexés sur lesquels :

la figure 1 est une vue en perspective éclatée d'un organe à fixer suivant l'invention et du support sur lequel il doit être rapporté ;

la figure 2 est, à échelle supérieure, une vue partielle en plan de cet organe à fixer, suivant la flèche II de la figure 1 ;

la figure 3 en est une vue partielle en coupe longitudinale, suivant la ligne III-III de la figure 2 ;

les figures 4, 5 sont des vues en plan illustrant, chacune respectivement, deux cas de mise en oeuvre de l'organe à fixer suivant l'invention ;

les figures 6, 7 sont des vues qui, chacune respectivement analogues à celles des figures 2, 3, se rapportent à une première variante de réalisation ;

les figures 8, 9 sont des vues qui, elles aussi chacune respectivement analogues à celles des figures 2, 3, se rapportent à une deuxième variante de réalisation ;

la figure 10 est une vue analogue à celle de la figure 3 pour une troisième variante de réalisation ;
la figure 11 est une vue qui, analogue à celle de la figure 2, se rapporte à une quatrième variante de réalisation ;

la figure 12 est une vue partielle en coupe de cette quatrième variante de réalisation, suivant la ligne brisée XII-XII de la figure 11.

Ces figures illustrent, à titre d'exemple, l'application de l'invention à une plaque de support 10, qui, destinée au soutien d'un quelconque appareillage électrique, non représenté, est à rapporter sur une boîte 11 propre au logement du mécanisme de celui-ci.

Cette plaque de support 10 ne relevant pas par elle-même de la présente invention, elle ne sera pas décrite dans tous ses détails ici.

Seuls en seront décrits les éléments nécessaires à la compréhension de l'invention.

Il suffira, à cet égard, d'indiquer que, en forme générale de cadre, elle présente une ouverture centrale 12 propre à l'engagement de l'appareillage électrique concerné, et que, pour le passage d'au moins un moyen de fixation, tel qu'une vis 13, elle comporte au moins un trou oblong 14.

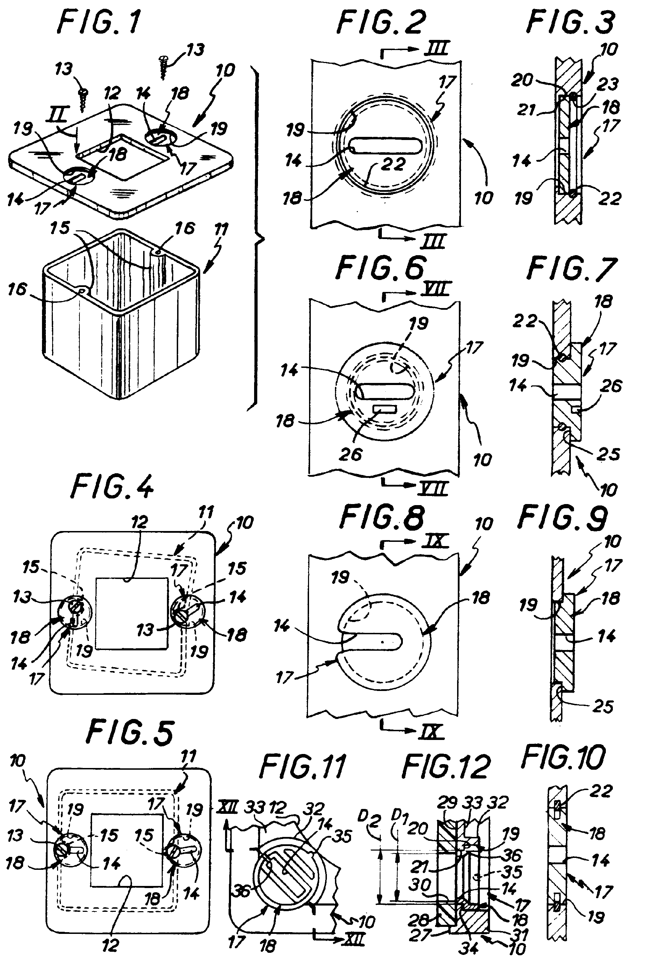

En pratique, dans les formes de réalisation représentées sur les figures 1 à 10, deux vis 13 étant nécessaires, la plaque de support 10 présente ainsi, disposés chacun respectivement de part et d'autre de son ouverture centrale 12, deux trous oblongs 14.

Mais le nombre de ces trous oblongs 14 est en fait indifférent.

La boîte 11 ne relevant pas non plus de la présente invention, elle ne sera pas non plus décrite en détail ici.

Il suffira d'indiquer que, pour réception des vis 13, elle présente, globalement en correspondance avec les trous oblongs 14 de la plaque de support 10, deux fûts 15 dotés chacun d'un perçage 16 propre à l'engagement d'une telle vis 13.

Suivant le dispositif de fixation de l'invention, désigné par la référence générale 17 sur les figures, l'un au moins des trous oblongs 14 que présente la plaque de support 10, et en pratique chacun de ceux-ci, appartient à une pièce distincte 18 montée rotative dans un logement 19, de contour circulaire, prévu à cet effet sur cette plaque de support 10.

En pratique, chacune des pièces 18 présentant ainsi un trou oblong 14 a la forme générale d'une pastille, de contour circulaire complémentaire de celui du logement 19 correspondant.

Dans la forme de réalisation représentée sur les figures 2 et 3, cette pastille, dépourvue de tout épaulement, est totalement disposée dans le logement 19, celui-ci présentant, transversalement, pour son appui, un épaulement 20, autour d'une large ouverture centrale 21 propre au passage de la vis 13 correspondante.

Si désiré, et tel que représenté, la pièce 18 présentant le trou oblong 14 est retenue axialement dans son logement 19.

Par exemple, il est prévu, pour ce faire, un anneau élastique 22, et par exemple un anneau élastique fendu, qui, engagé pour partie dans une gorge 23 du logement 19, porte par ailleurs sur la surface de la pièce 18 opposée à l'épaulement transversal 20 de celui-ci.

Dans la forme de réalisation représentée, le trou oblong 14 de cette pièce 18 constitue une boutonnière, de contour fermé, allongée sensiblement suivant un de ses diamètres.

Ainsi qu'il est aisé de le comprendre, si, tel que schématisé à la figure 4, la boîte 11 présente une quelconque déformation, en raison, par exemple, de son encastrement dans un mur, il est avantageusement possible, grâce à l'invention, de donner aux pièces 18 présentant des trous oblongs 14, par rotation autour de l'axe de leurs logements 19 respectifs, l'orientation la plus appropriée pour que, malgré cette déformation de la boîte 11, chacun de ces trous oblongs 14 se trouve au moins pour partie à l'aplomb du perçage 16 du fût 15 correspondant de cette boîte 11.

De même, et tel que schématisé à la figure 5, il est avantageusement possible, suivant l'invention, de procéder à un rattrapage d'entr'axe si, tel que représenté, la boîte 11 se trouve décalée par rapport à l'implantation souhaitée pour la plaque de support 10.

Dans la variante de réalisation représentée sur les figures 6 et 7, chacune des pièces 18 présentant un trou oblong 14 porte, par un épaulement transversal 25, sur la surface supérieure de la plaque de support 10, autour du logement 19 correspondant de celle-ci, et elle s'étend donc au moins pour partie en saillie sur cette plaque de support 10.

En outre, dans cette variante de réalisation, cette pièce 18 comporte, pour sa commande en rotation, à l'écart du trou oblong 14, un évidement 26, propre à faciliter cette commande en rotation par mise en oeuvre d'un outil, par exemple d'un tournevis.

Dans la forme de réalisation représentée, il s'agit d'un évidement borgne allongé parallèlement au trou oblong 14, à distance de celui-ci.

Comme précédemment, un anneau élastique 22 retient axialement la pièce 18 dans son logement 19.

Il n'en est pas de même dans la variante de réalisation représentée sur les figures 8 et 9, dans laquelle, au contraire, cette pièce 18 est engagée librement dans le logement 19 correspondant, jusqu'à buter, par son épaulement transversal 25, contre la surface supérieure de la plaque de support 10.

En outre, dans cette variante de réalisation, le trou oblong 14 que comporte cette pièce 18 débouche latéralement à la périphérie de celle-ci à l'une de ses extrémités.

Dans un tel cas, la vis 13 correspondante peut d'abord être amenée en prise avec le perçage 16 du fût 15 correspondant de la boîte 11, avant que, la pièce 18 étant rapportée sur elle de côté, puis engagée dans le logement 19 correspondant de la plaque de support 10, elle soit vissée à fond pour la fixation de cette dernière.

Dans la variante de réalisation représentée sur la figure 10, la pièce 18 est tout entière escamotée dans l'épaisseur de la plaque de support 10, en se fondant dans celle-ci.

Comme dans les formes de réalisation représentées sur les figures 1 à 7, un anneau élastique fendu 22 en assure alors la retenue axiale.

Dans la variante de réalisation représentée sur les figures 11, 12, la plaque de support 10 est équipée de quatre dispositifs de fixation 17 de l'invention, à raison d'un dans chacune de ses zones d'angle, et, au lieu d'être carrée, comme précédemment, son ouverture centrale 12 est circulaire.

Il s'agit, en pratique, d'une plaque de support comportant, à son dos, à l'intérieur d'un espace délimité par un rebord périphérique 27, et faisant saillie par rapport à ce dernier, un joint d'étanchéité adhésif 28, c'est-à-dire un joint d'étanchéité comportant en surface un film adhésif pour son assujettissement à la surface inférieure 29 d'une telle plaque de support.

Seule l'une des zones d'angle de la plaque de support 10 ainsi équipée d'un tel joint d'étanchéité adhésif 28 est représentée sur les figures.

Bien entendu, ce joint d'étanchéité adhésif 28, qui, par ailleurs, s'étend sur la totalité de la surface inférieure 29 de la plaque de support 10, présente, en correspondance avec l'ouverture centrale 12 de celle-ci, une ouverture de même contour, et, pour chacun des dispositifs de fixation 17, au droit du logement 19 dans lequel est montée rotative la pièce 18 présentant le trou oblong 14 d'un tel dispositif de fixation 17, un évidement 30, qui, en pratique, est de contour circulaire.

Dans la forme de réalisation représentée, la pièce 18 est tout entière disposée dans son logement 19, qui est, lui, légèrement en retrait par rapport à la surface supérieure 31 de la plaque de support 10, en étant formé à la faveur d'un puits 32 en saillie sur son fond 33, et, par un épaulement externe 34, elle est en appui contre un épaulement interne 20 de ce logement 19.

Suivant l'invention, il est tiré parti du joint d'étanchéité adhésif 28 pour assurer la retenue axiale de cette pièce 18.

Pour ce faire, ce joint d'étanchéité adhésif 28 déborde, par son évidement 30, du contour du logement 19, cet évidement 30 ayant un diamètre D1 légèrement inférieur à celui D2 de ce logement 19, et, conjointement, la pièce 18 s'étend axialement jusqu'à lui.

Autrement dit, la pièce 18 s'étend axialement au-delà de son épaulement externe 34, jusqu'à contact avec le joint d'étanchéité adhésif 28, et, donc, plus précisément, jusqu'à contact avec le film adhésif présent à la surface de celui-ci.

En pratique, si la force d'adhérence dont elle est ainsi l'objet est suffisante pour en assurer la retenue axiale en dehors de toute intervention, elle n'est pas suffisante pour s'opposer à sa rotation lorsque, pour l'obtention de l'orientation souhaitée pour le trou oblong 14, elle est commandée en rotation.

De préférence, et tel que représenté, il est prévu, entre la pièce 18 et le logement 19, des moyens d'indexation 35.

Dans la forme de réalisation représentée, ces moyens d'indexation 35 sont constitués par un ergot en saillie sur la surface cylindrique externe de la pièce 18 et propre à s'encliqueter dans une échancrure prévue de manière complémentaaire sur la surface cylindrique interne du logement 19.

Ils ont pour but, en conférant une position préférentielle à la pièce 18 dans le logement 19, ou, autrement dit en la pré-positionnant dans celui-ci, de minimiser l'éventuelle rotation à appliquer ensuite à cette pièce 18.

Dans la forme de réalisation représentée, cette position préférentielle correspond à une orientation du trou oblong 14 normale au plan passant par le centre de la plaque de support 10 et l'axe du logement 19.

L'utilisateur aura ensuite d'autant moins de réglage à effectuer que son perçage aura été précis par rapport à un tel pré-positionnement.

De préférence, et tel que représenté, la pièce 18 est en outre ouverte localement par une fente 36, qui, de largeur moindre que celle du trou oblong 14, relie à l'extérieur ce trou oblong 14.

Outre que, conférant une certaine élasticité radiale à la pièce 18, en permettant ainsi à celle-ci de se plaquer sous une légère contrainte élastique contre la surface interne du logement 19, cette fente 36 facilite la rotation de la pièce 18, en minimisant l'effort à surmonter pour que l'ergot qu'elle comporte pour la constitution des moyens d'indexation 35 sorte de l'échancrure correspondante du logement 19.

Enfin, dans la forme de réalisation représentée, le trou oblong 14 a, à son débouché supérieur, un profil en trémie.

Bien entendu, la présente invention ne se limite pas aux formes de réalisation décrites et représentées, mais englobe toute variante d'exécution.

En particulier, au lieu de s'étendre sensiblement diamétralement par rapport à la pièce rotative qu'il affecte, chacun des trous oblongs que comporte la plaque de support à fixer peut être disposé en position excentrée sur cette pièce rotative.

En outre, au lieu de ne correspondre qu'à la fixation d'un seul appareillage électrique, cette plaque de support peut être une plaque de support double, c'est-à-dire une plaque de support convenant à la fixation côte à côte de deux de tels appareillages électriques.

De plus, si, dans la forme de mise en oeuvre plus particulièrement décrite et représentée, une telle plaque de support est à rapporter sur une boîte préalablement encastrée dans un mur, l'invention trouve évidemment encore son application lorsqu'elle est à rapporter directement sur un tel mur, à l'aide par exemple de chevilles préalablement implantées dans celui-ci.

Le domaine d'application de l'invention n'est d'ailleurs pas nécessairement limité à celui des seules plaques de support pour appareillages électriques, mais s'étend au contraire de manière plus générale à celui de n'importe quel organe à fixer sur un quelconque support, et, par exemple, à celui de n'importe quel tableau, ou socle, à fixer en saillie sur un mur.

**Revendications**

1. Dispositif de fixation pour organe à fixer sur un quelconque support, du genre comportant, pour le passage d'un moyen de fixation tel que vis (13), au moins un trou oblong (14), caractérisé en ce que ledit trou blong (14) appartient à une pièce distincte (18) montée rotative dans un logement (19) prévu à cet effet sur l'organe à fixer.

2. Dispositif de fixation suivant la revendication 1, caractérisé en ce que la pièce (18) comportant le trou oblong (14) est retenue axialement dans le logement (19) correspondant.

3. Dispositif de fixation suivant la revendication 2, caractérisé en ce que, l'organe à fixer comportant, à son dos, un joint d'étanchéité adhésif (28), la retenue axiale de la pièce (18) comportant le trou oblong (14) résulte de ce que ce joint d'étanchéité adhésif (28) déborde du contour du logement (19) dans lequel cette pièce (18) est montée rotative, et de ce que cette dernière s'étend axialement jusqu'à lui.

4. Dispositif de fixation suivant la revendication 1, caractérisé en ce que la pièce (18) comportant le trou oblong (14) est engagée librement dans le logement (19) correspondant.

5. Dispositif de fixation suivant l'une quelconque des revendications 1 à 4, caractérisé en ce que des moyens d'indexation (35) sont prévus entre la pièce (18) comportant le trou oblong (14) et le logement (19) dans lequel elle est montée rotative.

6. Dispositif de fixation suivant l'une quelconque des revendications 1 à 5, caractérisé en ce que la pièce (18) comportant le trou oblong (14) est ouverte localement par une fente (36) qui relie à l'extérieur ledit trou oblong.

7. Dispositif de fixation suivant l'une quelconque des revendications 1 à 6, caractérisé en ce que le trou oblong (14) est une boutonnière.

8. Dispositif de fixation suivant l'une quelconque des revendications 1 à 5, caractérisé en ce que, à l'une de ses extrémités, le trou oblong (14) débouche latéralement à la périphérie de la pièce (18) qu'il affecte.

9. Dispositif de fixation suivant l'une quelconque des revendications 1 à 8, caractérisé en ce que la pièce (18) présentant le trou oblong (14) a la forme générale d'une pastille.

10. Dispositif de fixation suivant l'une quelconque des revendications 1 à 9, caractérisé en ce que, pour sa commande en rotation, la pièce (18) présentant le trou oblong (14) comporte, à l'écart de celui-ci, un évidement (26).

11. Dispositif de fixation suivant l'une quelconque des revendications 1 à 10, caractérisé en ce que plusieurs trous oblongs (14) étant présents, chacun d'eux appartient à une pièce (18) distincte.

12. Organe à fixer sur un quelconque support, caractérisé en ce qu'il lui est associé au moins un dispositif de fixation conforme à l'une quelconque des revendications 1 à 11.

13. Organe à fixer suivant la revendication 12, caractérisé en ce qu'il s'agit d'une plaque de support (10) pour appareillage électrique.

**Patentansprüche**

1. Befestigungsvorrichtung für ein auf einem beliebigen träger zu befestigendes Element, mit mindestens einem länglichen Loch (14) für den Durchlaß eines Befestigungsmittels, wie beispielsweise einer Schraube, **dadurch gekennzeichnet,** daß das längliche Loch (14) zu einem getrennten Teil (18) gehört, das drehbar in einer zu diesem Zweck an dem zu befestigenden Element vorgesehenen Ausnehmung (19) angebracht ist.

2. Befestigungsvorrichtung nach Anspruch 1, **dadurch gekennzeichnet,** daß das Teil (18), das das längliche Loch (14) enthält, axial in der entsprechenden Ausnehmung (19) gehalten ist.

3. Befestigungsvorrichtung nach Anspruch 2, **dadurch gekennzeichnet,** daß das zu befestigende Element an seiner Rückseite ein klebendes Abdichtungsteil (28) aufweist, wobei sich das axiale Halten des Teils (18) mit dem länglichen Loch (14) dadurch ergibt, daß dieses klebende Abdichtungsteil (28) über den Umfang der Ausnehmung (19), in welcher dieses Teil (18) drehbar angebracht ist, hinausragt und dadurch, daß dieses letztere sich axial bis zu ihm erstreckt.

4. Befestigungsvorrichtung nach Anspruch 1, **dadurch gekennzeichnet,** daß das Teil (18), das das längliche Loch (14) enthält, frei in der entsprechenden Ausnehmung (19) eingesetzt ist.

5. Befestigungsvorrichtung nach einem der Ansprüche 1 bis 4, **dadurch gekennzeichnet,** daß Indexiermittel (35) vorgesehen sind zwischen dem Teil (18), das das längliche Loch (14) enthält, und der Ausnehmung (19), in der dieses drehbar angebracht ist.

6. Befestigungsvorrichtung nach einem der Ansprüche 1 bis 5, **dadurch gekennzeichnet,** daß das Teil (18), das das längliche Loch (14) enthält, durch einen Schlitz (36) lokal geöffnet ist, der das längliche Loch mit der Außenseite verbindet.

7. Befestigungsvorrichtung nach einem der Ansprüche 1 bis 6, **dadurch gekennzeichnet,** daß das längliche Loch (14) knopflochartig ist.

8. Befestigungsvorrichtung nach einem der Ansprüche 1 bis 5, **dadurch gekennzeichnet,** daß das längliche Loch (14) an einem seiner Enden seitlich am Umfang des Teils (18) mündet, das es beeinflußt.

9. Befestigungsvorrichtung nach einem der Ansprüche 1 bis 8, **dadurch gekennzeichnet,** daß das Teil (18), das das längliche Loch (14) aufweist, die allgemeine Form einer Pastille hat.

10. Befestigungsvorrichtung nach einem der Ansprüche 1 bis 9, **dadurch gekennzeichnet,** daß das Teil (18), das das längliche Loch (14) aufweist, von diesem beabstandet zu seiner Drehbetätigung eine Vertiefung (26) enthält.

11. Befestigungsvorrichtung nach einem der Ansprüche 1 bis 10,

**dadurch gekennzeichnet,** daß mehrere längliche Löcher (14) vorhanden sind, von denen jedes zu einem unterschiedlichen Teil (18) gehört.

12. Element zum Befestigen auf einem beliebigen Träger, **dadurch gekennzeichnet,** daß ihm mindestens eine Befestigungsvorrichtung gemäß einem der Ansprüche 1 bis 11 zugeordnet ist.

13. Element zum Befestigen nach Anspruch 12, **dadurch gekennzeichnet,** daß es sich um eine Trägerplatte (10) für ein elektrisches Gerät handelt.

**Claims**

1. A fixing device for a member to be fixed on any support, of the type comprising at least one oblong hole (14) for receiving a fixing means such as a screw (13), characterised in that said oblong hole (14) belongs to a separate part (18) mounted rotatably in a housing (19) provided for that purpose on the member to be fixed.

2. A fixing device according to claim 1 characterised in that the part (18) comprising the oblong hole (14) is axially retained in the corresponding housing (19).

3. A fixing device according to claim 2 characterised in that, the member to be fixed comprising at its back an adhesive sealing member (28), axial retention of the part (18) comprising the oblong hole (14) results from the adhesive sealing member (28) projecting beyond the contour of the housing (19) in rich said part (18) is rotatably mounted, and from the latter extending axially as far as same.

4. A fixing device according to claim 1 characterised in that the part (18) comprising the oblong hole (14) is freely engaged in the corresponding housing (19).

5. A fixing device according to any one of claims 1 to 4 characterised in that indexing means (35) are provided between the part (18) comprising the oblong hole (14) and the housing (19) in which it is rotatably mounted.

6. A fixing device according to any one of claims 1 to 5 characterised in that the part (18) comprising the oblong hole (14) is opened locally by a slot (36) which connects said oblong hole to the outside.

7. A fixing device according to any one of claims 1 to 6 characterised in that the oblong hole is a buttonhole.

8. A fixing device according to any one of claims 1 to 5 characterised in that, at one of its ends, the oblong hole (14) opens laterally at the periphery of the part (18) in rich it is provided.

9. A fixing device according to any one of claims 1 to 8 characterised in that the part (18) having the oblong hole (14) is in the general shape of a round pellet member.

10. A fixing device according to any one of claims 1 to 9 characterised in that, for rotation thereof, the part (18) having the oblong hole (14) comprises a recess (26) at a spacing from the oblong hole (14).

11. A fixing device according to any one of claims 1 to 10 characterised in that, the device having a plurality of oblong holes (14), each of those belongs to a separate part (18).

12. A member to be fixed on any support characterised in that associated therewith is at least one fixing device according to any one of claims 1 to 11.

13. A member to be fixed, according to claim 12 characterised in that it is a support plate (10) for a piece of electrical equipment.

FIG.1  FIG.2  FIG.3

FIG.4  FIG.6  FIG.7

FIG.5  FIG.8  FIG.9

FIG.11  FIG.12  FIG.10